Europäisches Patentamt

(19) European Patent Office

Office européen des brevets

(11) Veröffentlichungsnummer: **0 215 079**
**B1**

(12) **EUROPÄISCHE PATENTSCHRIFT**

(45) Veröffentlichungstag der Patentschrift:
16.08.89

(51) Int. Cl.⁴: **B 65 H 67/04,** B 65 B 35/16

(21) Anmeldenummer: **86901862.2**

(22) Anmeldetag: **17.03.86**

(86) Internationale Anmeldenummer:
PCT/EP 86/00150

(87) Internationale Veröffentlichungsnummer:
WO 86/05468 (25.09.86 Gazette 86/21)

(54) VORRICHTUNG ZUM WICKELN EINES STRANGPROFILES AUS ELASTISCHEM UND/ODER FLEXIBLEM MATERIAL, VORZUGSWEISE WEICH-KUNSTSTOFF.

(30) Priorität: **19.03.85 DE 3509794**

(43) Veröffentlichungstag der Anmeldung:
**25.03.87 Patentblatt 87/13**

(45) Bekanntmachung des Hinweises auf die Patenterteilung:
**16.08.89 Patentblatt 89/33**

(84) Benannte Vertragsstaaten:
**AT BE CH DE FR GB IT LI NL**

(56) Entgegenhaltungen:
**CH-A- 482 537**
**DE-A- 2 115 285**
**DE-C- 1 266 095**
**FR-A- 2 165 606**
**US-A- 2 309 755**
**US-A- 4 124 340**

(73) Patentinhaber: **KOLODZIEJ, Wolfgang, Uhlenberger Str. 48, D-4520 Melle 2 (DE)**

(72) Erfinder: **KOLODZIEJ, Wolfgang, Uhlenberger Str. 48, D-4520 Melle 2 (DE)**

(74) Vertreter: **Geyer, Werner, Dr.-Ing., Patentanwaltskanzlei Dr. Werner Geyer Hermann-Vogel-Strasse 12, D-8000 München 40 (DE)**

**Beschreibung**

Die Erfindung bezieht sich auf eine Vorrichtung zum Wickeln eines Strangprofiles aus elastischem und/oder flexiblem Material, insbesondere Weich-Kunststoff, mit einem Vorrichtungsgestell, an dem eine Wickelstation mit einer Aufwickeleinrichtung, mindestens eine das Strangprofil an die Aufwickeleinrichtung abgebende Zuführung, ein Schneideorgan zum Abschneiden des Spiralendes und eine Einrichtung zum Verpacken der gewickelten Profilspirale angeordnet sind.

Profile aus Weich-Kunststoff, insbesondere auf der Basis von Polyvinylchlorid mit einer Shore-Härte von beispielsweise 45° bis 85°, werden für die Lagerhaltung und den Transport zum Verarbeitungsort in gewissen Längen zu einem kompakten Bündel gewickelt. Dieses Wickeln wird vielfach manuell vorgenommen, was arbeits- und zeitaufwendig ist und trotz der Handwicklung oftmals keine einwandfreie Wicklung ergibt.

Aus der US-A-4 124 340 ist eine Vorrichtung zum Aufwickeln von Kunststoffschläuchen bekannt, bei der ein motorischer Antrieb der Aufwickeltrommel eingesetzt wird, wobei die Aufwickeldrehzahl in Abhängigkeit von einer Durchhangsteuerung des Kunststoffschlauches nach dessen Austritt aus dem Extruder laufend eingestellt wird. Hierbei wird gegebenenfalls auch noch eine Einrichtung zum Einstellen eines konstanten Bandzuges der Trommel vorgeschaltet. Ein Wechsel der Aufwickeltrommeln ist bei der bekannten Vorrichtung mit erheblichem Aufwand verbunden, da eine relativ große Aufwickeltrommel aus einem großen Gestell ausgebaut und eine entsprechend große (neue) Aufwickeltrommel in das Gestell wieder eingebaut werden muß. Überdies eignet sich die bekannte Vorrichtung nur sehr begrenzt für bestimmte Strangprofile, nicht jedoch für Weichprofile, wie sie z.B. als Dichtungsprofile eingesetzt werden, da bei diesen die Anwendung eines wie auch immer gearteten Zuges durch die Aufwickeltrommel möglichst vermieden werden muß. Die bekannte Vorrichtung ist wegen des zeitaufwendigen Trommelwechsels für kontinuierliche, hohe Wickelleistungen nicht geeignet und schon gar nicht zum Einsatz beim Aufwickeln von Weichkunststoff-Profilen.

Die DE-A-I 266 095 beschreibt eine selbsttätig und ununterbrochen arbeitende Ringwickeleinrichtung für die Herstellung von Wickeln aus langgestrecktem Gut, vorzugsweise aus elektrischen Leitungen. Dabei sind in der Vorrichtung zwei gleichartig nebeneinander angeordnete Wickelformen vorgesehen, die einzeln angetrieben werden und jeweils getrennt Vorrichtungen zum Öffnen und Ausstoßen des fertigen Ringwickels sowie zum Festklemmen des Anfangs des zugeführten Wickelgutes aufweisen. Ferner ist eine parallel zur Achse der Wickelformen verfahrbare Zuführung vorgesehen, mit der Wickelgut abwechselnd einer der beiden Wickelstationen zugeführt werden kann. Das Wickelgut wird ohne Unterbrechung mit sehr großer Geschwindigkeit einer Wickelstation angeliefert, bis der Wickel die gewünschte Länge aufgenommen hat. Sodann wird durch ein Schneideorgan das Wickelgut abgetrennt, die Zuführeinrichtung verfahren und anschließend der neue Anfang des Wickelgutes in die leere Wickelform der anderen Wickelstation eingeführt. Da sich die Vorgänge rasch abspielen, ist ein Speicher mit kleiner Kapazität zur Aufnahme des beim Wechsel der Wickelstation kontinuierlich anlaufenden Gutes vorgesehen. Das Wickelgut wird während des eigentlichen Wickelvorganges von der angetriebenen Wickelform aus seinem Speicher abgezogen, während es nach der Verschiebung der Zuführeinrichtung der neuen Wickelstation über einen der Zuführeinrichtung zugeordneten, mit einer Überholkupplung versehenen Raupenabzug zugeführt wird. Die bekannte Vorrichtung kann für das rasche Aufwickeln großer Längen von zugfestem Wickelgut eingesetzt werden, eignet sich jedoch überhaupt nicht zum Wickeln von elastischen, insbesondere Weichkunststoff-Profilen, bei denen keinerlei nennenswerte Zugkräfte im Wickelstrang übertragen werden dürfen.

Aus der FR-A-2 165 606 ist eine aufwendig aufgebaute Wickel- und Verpackungsmaschine bekannt, bei der fünf Wickeldorne auf einem zentralen Drehtisch angeordnet und in aufeinanderfolgende Arbeitsstellungen überführbar sind. Die schrittweise Weiterschaltung der zentral angeordneten Wickelstationen jeweils in eine neue Arbeitsstellung ist dabei allerdings nicht allein in Abhängigkeit von der Arbeitsgeschwindigkeit an der jeweiligen Station möglich, sondern erst dann, wenn an der Wickelstation, bei der die längstdauernde Arbeit ausgeführt werden muß, der Bearbeitungsvorgang beendet ist. Dies bedeutet also, daß die Abgabekapazität dieser bekannten Vorrichtung von dem am längsten dauernden Arbeitsablauf an einer der Bearbeitungsstationen vorgegeben wird. Tritt z.B. ein Fehler an der Verpackungs- oder an der Verschnüreinrichtung auf, muß die gesamte Vorrichtung angehalten werden und es können auch solche Arbeitsstationen, die fehlerfrei arbeiten, nicht mehr zwichenzeitlich z.B. auf Vorrat weiterlaufen. Die Gesamteinrichtung ist sehr kompliziert aufgebaut, aufgrund der Vielzahl der eingesetzten Wickelstationen, Bearbeitungseinrichtungen an den einzelnen Arbeitsstationen sowie der erforderlichen Koordinationseinrichtungen teuer sowie störanfällig und eignet sich wegen der eingesetzten Wickelgutverschnürungen auch nicht zur Verwendung bei Weichkunststoff-Profilen.

Eine Wickeleinrichtung der eingangs genannten Art wird in der CH-A-482 537 beschrieben, bei der auf einem Vorrichtungsgestell eine einzelne Wickelstation in Form eines Spulenkernes angeordnet ist. Dieser ist am Gestell lageunveränderlich angebracht und weist an seinem Umfang, jeweils um 90° zueinander versetzt, vier Möglichkeiten zum Anbringen einer Aufwickelspule auf. Zum Betrieb muß an der der Wickelstellung zugewandten Stelle des Spulenkernes eine geeignete Aufwickelspule aufgesteckt werden, der über eine Zuführung das Wickelgut angeliefert wird. Ist der gewünschte Ringwickel erreicht, wird über eine Schneideinrichtung das Ende der Wickelspirale vom Strang abgeschnitten und der Spulenkern weitergeschaltet, so daß eine andere Aufnahmestelle für eine neue Aufwickelspule in die Wickelposition geschwenkt und dort für einen neuen Aufwickelvorgang freigegeben wird. Die vollen Wickelspulen können im Verlauf der weiteren Drehung des Spulenkerns einer geeigneten Verpackungseinrichtung zugeführt und einem nachgeschalteten Förderband übergeben werden. Nach Beendigung des Aufwickelvorgangs muß die aufgewickelte Spule aus der Wickelstellung weggeschwenkt und am Spulenstern eine neue Spule aufgesteckt werden, wodurch Verzögerungen und Unterbrechungen auftreten, welche die Wickelleistung der Anlage deutlich begrenzen. Dies tritt umso stärker in Erscheinung, als Trommelspulen eingesetzt sind, die radial zur Drehrichtung des Spulenkerns aufgesteckt werden müssen und räumlich wie materialmäßig aufwendig sind. Die Spulen müssen jeweils manuell aufgesteckt bzw. abgenommen und von einem außerhalb der Vorrichtung liegenden Magazin angeliefert werden.

Ausgehend hiervon liegt der Erfindung die Aufgabe zugrunde, eine solche gattungsgemäße Vorrichtung so zu verbessern, daß bei relativ einfachem Aufbau eine vollständige Automatisierung an der Wickelstation bei deutlich gesteigerter Wickelleistung erreicht werden kann.

Erfindungsgemäß wird dies bei einer Vorrichtung der eingangs genannten Art dadurch erreicht, daß am Vorrichtungsgestell zwei in senkrechter und waagerechter Ebene höhen-, längs- und gegeneinander verfahrbare Wickelstationen angebracht sind, die jeweils in eine Wickelstellung ein- und aus dieser wieder herausfahrbar sind, daß die Zuführung seitlich quer zur Längsverfahrrichtung der Wickelstationen verfahrbar angeordnet, eine Einrichtung zur Lagefixierung des Spiralendes ausgebildet, ein verschwenkbarer höhen- und längsverfahrbarer, Greifer zum Aufnehmen, Transportieren und Ablegen der gewickelten Profilspirale und schließlich eine elektronische Überwachungssteuerung vorgesehen sind, wobei letztere den automatischen Ablauf aller vorzunehmenden Einzelfunktionen steuert.

Bei der erfindungsgemäßen Wickelvorrichtung können zwei unabhängig voneinander am Gestell verfahrbare Wickelstationen eingesetzt werden, auf die alternativ die jeweils zu wickelnden Profilspiralen nacheinander aufgewickelt werden können. Ist also an einer Wickelstation, die sich gerade in Wickelstellung befindet, das Aufwickeln einer Profilspirale beendet, wird automatisch das Bandende abgeschnitten, die Wickelstation aus der Wickelstellung herausgefahren und die bereits in Bereitschaftsstellung befindliche andere Wickelstation mit neuem Wickelteller in die Wickelstellung eingefahren. Dabei ist kein gesonderter Aufsteck- oder Anbringvorgang für den neuen Wickelteller mehr erforderlich, da dieser bereits auf der in Bereitschaftsstellung befindlichen Wickelstation vollständig angebracht ist und nur mehr des Einfahrens in die Wickelstellung bedarf, in der er sofort betriebsbereit ist. Während des Aufwickelns der neuen Profilspirale kann die vorher gewickelte Profilspirale entfernt und es können alle Zurüstarbeiten zum Befestigen bzw. Aufstecken und Fertigmachen eines neuen Wickeltellers für die Aufnahme einer neuen Profilspule vorgesehen werden. Der erfindungsgemäße Einsatz einer elektronischen Überwachungssteuerung zum Steuern des automatischen Ablaufs aller vorzunehmender Einzelfunktionen stellt ferner sicher, daß alle Zeitabläufe der zu bewegenden bzw. funktionsmäßig anzusteuernden Einzelkomponenten in genauester Übereinstimmung miteinander ablaufen und Todzeiten auf ein Minimum eingestellt werden können, wodurch die Aufwickelleistung der gesamten Vorrichtung optimiert werden kann.

Eine bevorzugte Ausführungsform der erfindungsgemäßen Vorrichtung ist dadurch gekennzeichnet, daß jede Wickelstation einen um eine senkrechte Achse drehbaren motorisch angetriebenen Wickelteller aufweist, der jeweils an einem am Vorrichtungsgestell längsverfahrbar gelagerten, in der Höhe ausfahrbar ausgeführten Waagen oder Schlitten gehalten ist. Dabei wird bevorzugt der Wagen oder Schlitten der eine Wickelstation an einer außenseitigen Längsführung und der Wagen oder Schlitten der anderen Wickelstation an einer gegenüberliegenden Längsführung des Vorrichtungsgestelles verschiebbar gelagert und beide Wagen oder Schlitten sind durch ein motorisch abgetriebenes Bewegungsglied, vorzugsweise durch eine Kugelrollspindel, hin- und herverfahrbar. Bevorzugt wird jeder Wagen oder Schlitten durch ein Huborgan, wie z.B. einen Druckmittelzylinder, höhenverfahrbar ausgebildet.

Bei einer erfindungsgemäßen Vorrichtung weist weiterhin jeder Wickelteller bevorzugt eine in sich ebene Auflagefläche für die zu wickelnde Profilspirale auf, von der sich mittig ein Kern mit mehreren, am Kernumfang gleichmäßig verteilten Schlitzen zur Aufnahme und Fixierung des Anfangs jeder Spirale abhebt oder der, gleichfalls bevorzugt, ein höhenfahrbares Führungsteil zur Bildung der Anfangswicklung der Spirale um der Kern. Der Kern sorgt dafür, daß beim Auflegen einer neuen Trägerscheibe zur Aufnahme einer Profilspirale durch die Zusammenwirkung des Mittelloches der Trägerscheibe mit dem Kern sich sogleich eine Zentrierung der Trägerscheibe gegenüber dem Wickelteller ergibt.

Eine weitere vorzugsweise Ausgestaltung der erfindungsgemäßen Vorrichtung besteht auch darin, daß die Zuführung einen in der Breite stufenlos einstellbaren Führungskanal aufweist, der auf einer Querführung beidseits der Zuführrichtung mittels eines angetriebenen Bewegungsorganes, das vorzugsweise aus einer Kugelrollspindel besteht, hin- und herverschieblich gelagert ist. Dabei ist bevorzugt in dem Führungskanal ein endlos umlaufendes, motorisch angetriebenes Transportband zur Förderung des Profilstranges angeordnet, dem eine die Profilstrangförderung unterstützende Andruckrolle zugeordnet ist, die ihrerseits von der elektronischen Überwachungssteuerung bei überschüssig anstehendem Strangprofil in eine Funktionsstellung und nach Aufholen des überschüssigen Strangprofiles durch die Zuführung in eine Nicht-Funktionsstellung bewegbar (höhenverschwenkbar) ist.

In weiterer bevorzugter Ausgestaltung weist bei einer erfindungsgemäßen Vorrichtung der Greifer ein auf Längs-Führungen des Vorrichtungsgestelles mittels eines Bewegungsorganes (wie z.B. einer druckstangenlosen Druckzylinder-Band-Anordnung) verfahrbares Traggestell auf, auf dem sich ein Druckmittelzylinder oder ein ähnliches geeignetes Organ abstützen, an dessen höhenverfahrbarer Kolbenstange mittelbar Arme befestigt sind, die über Hebel- und/oder Federelemente verschwenkbare Greiffinger zum Unterfassen einer gewickelten oder einer auf einer auf dem Wickelteller aufliegenden Trägerscheibe aufgewickelten Spirale halten.

Eine besonders günstige Ausgestaltung der erfindungsgemäßen Vorrichtung läßt sich auch dadurch erreichen, daß dem Greifer in Strangprofil-Zuführrichtung und in Spiralen-Abtransportrichtung ein einen Stapel mit Trägerscheiben aufnehmendes und die Trägerscheiben einzeln auf die Wickelteller abgebendes Magazin nachgeschaltet ist, das mit dem Greifer bewegungsmäßig in Längsverfahrrichtung gekoppelt ist. Bevorzugt weist dabei dieses Magazin ein sich auf dem Vorrichtungsgestell abstützendes, die Trägerscheiben aufnehmendes, ortsfestes Traggestell mit einem durch das Bewegungsorgan längsverfahrbaren Haltering auf, an welchem feststehende und bewegliche Greiffüße für das Herausnehmen und Tragen einer Pappscheibe aus dem Stapel vorgesehen sind und dem ein mitfahrendes, die Trägerscheibe aus dem Haltering herausdrückendes, sie durch Saugkraft haltendes und auf den Teller auflegendes Saug-Druckorgan zugeordnet ist. Eine andere, ebenfalls bevorzugte Ausgestaltung des Magazins besteht aber auch darin, daß es von einem am Gestell geneigt angeordneten Trägerscheibenkorb und einem die Trägerscheiben einzeln entnehmenden, saugend haltenden und auf einem Schwenkweg zum Wickelteller bringenden Saugorgan («Sauggreifer») gebildet wird.

Bei der erfindungsgemäßen Vorrichtung wird vorzugsweise an dem Vorrichtungsgestell, der Zuführung gegenüberliegend, ein taktweise höhenverfahrbarer Aufnahmetisch für die Lagerung einer die gewickelten Profilspiralen über- und/oder nebeneinander gestapelt aufnehmenden Verpackung (wie z.B. Karton o.ä.) gelagert.

Besonders günstig ist es ferner, wenn bei einer erfindungsgemäßen Vorrichtung an dem Vorrichtungsgestell Aufnahmen für zwei Folienrollen und eine Zuschweiß- und Trenneinrichtung für die Verpackung der gewickelten Profilspiralen ohne Trägerscheiben in Kunststoffolie angeordnet sind.

Die Erfindung wird nachfolgend anhand der Zeichnung beispielshalber im einzelnen noch näher erläutert. Es zeigen:

Fig. 1 eine perspektivische Ansicht einer erfindungsgemäßen Wickelvorrichtung für Strangprofile mit verfahrbaren Wickelstationen, Pappscheiben-Magazin und Greifern;

Fig. 2 eine perspektivische Teilansicht der in Figur 1 dargestellten Wickeleinrichtung in Strangprofil-Zuführrichtung gesehen, mit Strangprofil-Zuführung, Schneideorgan, Wickelstation, Magazin und Greifer;

Fig. 3 eine schematische Draufsicht auf die Wickelvorrichtung nach Anspruch 1 oder 2 mit zwei Wickelstationen, Strangprofil-Zuführung und Auflagetisch für eine Verpackung;

Fig. 4 eine schematische Draufsicht auf einen Wickelteller einer Wickelstation mit Zuführung für eine erfindungsgemäße Wickelvorrichtung;

Fig. 5 eine schematische Darstellung einer Unteransicht des Magazines und des Greifers bei einer erfindungsgemäßen Wickelvorrichtung;

Fig. 6 eine schematische Seitenansicht der Zuführung mit vorgelagertem Extruder und dazwischen angeordneter elektronischer Überwachungs- und Kontrollsteuerung bei einer erfindungsgemäßen Wickelvorrichtung, sowie

Fig. 7 bis 10 schematische Darstellungen des Verfahrensablaufes zum Wickeln des Strangprofiles und Ablegen der gewickelten Profilspirale in eine Verpackung bei einer erfindungsgemäßen Wickelvorrichtung.

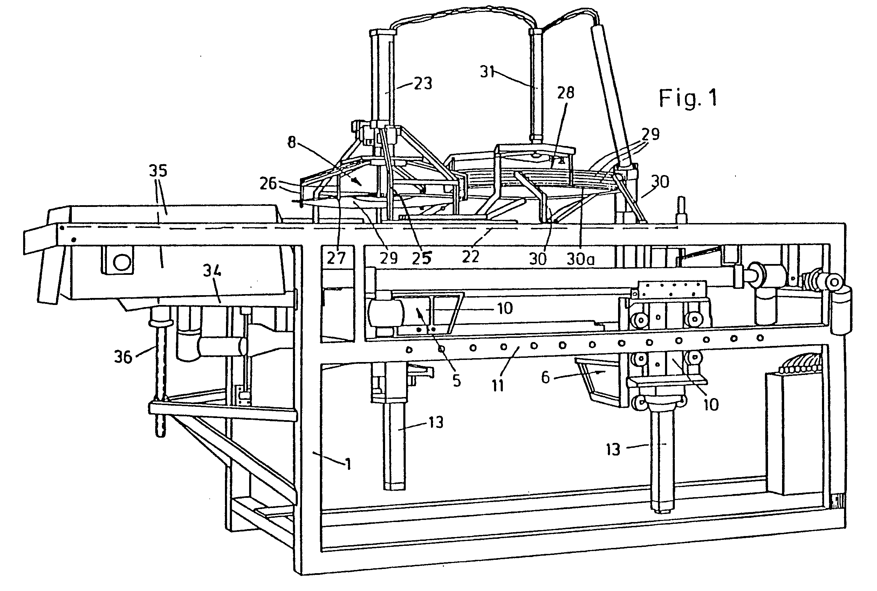

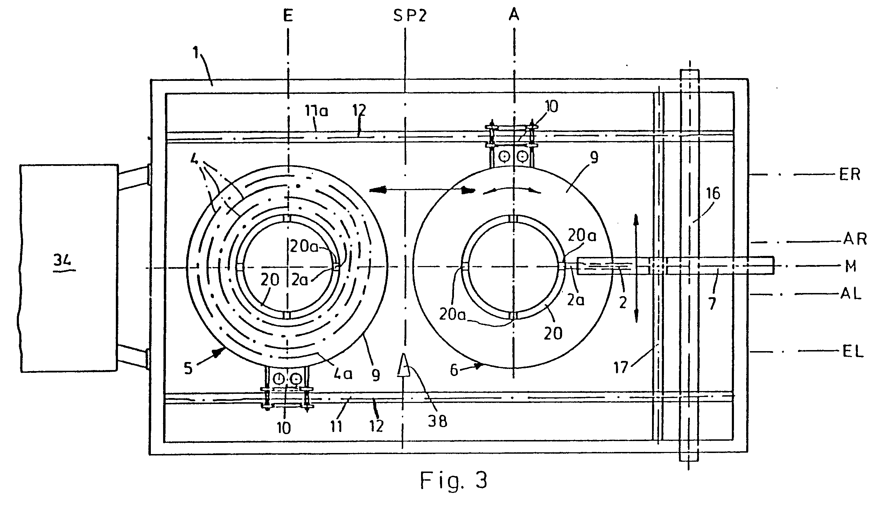

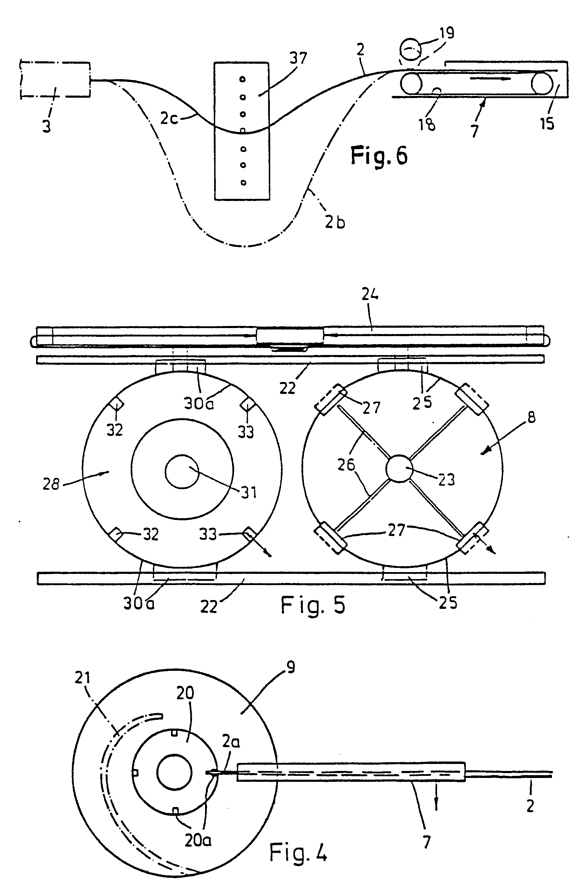

In Figur 1 ist mit 1 ein rahmenartiges Vorrichtungsgestell einer Vorrichtung beschrieben, die zum Wickeln eines Strangprofiles 2 (Figur 6) aus elastischem und/oder flexiblem Material, insbesondere aus Weich-Kunststoff eingerichtet ist. Dieses kontinuierlich aus einem Extruder 3 (Figur 3) angelieferte und eine Kühlstrecke durchlaufende, jedoch danach immer noch weiche Strangprofil 2 wird in dieser Vorrichtung automatisch zu einer vorzugsweise in waagerechter Ebene liegenden Profilspirale 4 (vgl. Figur 3) mit vorgegebener bzw. eingestellter Strangprofil-Länge aufgewickelt.

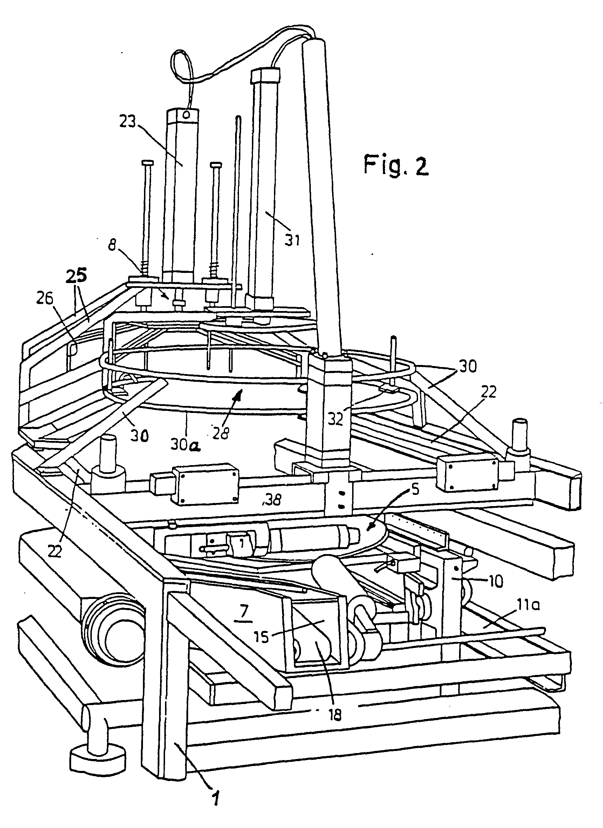

An und in diesem Vorrichtungsgestell 1 sind, wie aus Figur 1 ersichtlich, zwei im Abstand zueinander vorgesehene, in senkrechter und waagerechter Ebene höhen- und längsverfahrbare und gegeneinander verfahrbare Wickelstationen 5 und 6, eine das Strangprofil 2 jeweils an die in der Wickelstellung stehende Wickelstation 5 bzw. 6 abgebende, quer zur Längsverfahrrichtung der Wickelstationen 5 und 6 seitenverfahrbare Zuführung 7 (Figur 2) sowie ein höhen- und längsverfahrbarer Greifer 8 zum Aufnehmen, Transportieren und Ablegen der gewickelten Profilspirale 4 angeordnet.

Jede Wickelstation 5, 6 weist einen um eine senkrechte Achse drehbaren, motorisch angetriebenen Wickelteller 9 auf (Figur 3), der an einem höhen- und längsverfahrbaren Wagen oder Schlitten 10 gelagert ist. Dabei ist der Wagen oder Schlitten 10 der Wickelstation 5 an einer außenseitigen Längsführung 11 (Figuren 1 und 3) durch vorzugsweise eine motorisch angetriebene Kugelrollspindel 12 in Längsrichtung hin- und herfahrbar und in sich höhenverfahrbar, z.B. durch Druckmittelzylinder 13 (vgl. Figur 1) und an einer aufrechten Führung abwälzende Rollen oder dergleichen auf- und abbewegbar.

Der Wagen oder Schlitten 10 der zweiten Wickelstation 6 ist in gleicher Weise längs- und höhenverfahrbar ausgeführt, jedoch an einer der Führung 11 gegenüberliegenden zweiten, außenseitigen Längsführung 11a gehalten (Figuren 2 und 3). Hierdurch ist ein ungestörtes Gegeneinander- und Übereinander-Hinwegfahren der beiden Wickelstationen 5 und 6 möglich, was weiter unten noch näher beschrieben wird.

Die Zuführung 7 ist von einem Zuführkanal 15 gebildet (vgl. Figur 2), der sich in Längsverfahrrichtung der beiden Wickelstationen 5 und 6 erstreckt und auf einer Führung 16 (Figur 3) querverschieblich (hin- und herverschiebbar) gelagert ist sowie vorzugsweise durch eine motorisch angetriebene Kugelrollspindel 17 quer zur Wickelstation-Längsverfahrrichtung bewegt wird.

Im Zuführkanal 15 ist ein in Kanal-Längsrichtung endlos umlaufendes, motorisch angetriebenes Transportband 18 (Figur 2) für die Förderung des Profilstranges 2 angeordnet, dem eine in eine Funktionsstellung und eine Nicht-Funktionsstellung bewegbare Andruckrolle 19 zugeordnet ist (vgl. Figur 6).

Der Wickelteller 9 jeder Wickelstation 5 bzw. 6 ist mit einem sich von ihm abhebenden, zentrischen Kern 20 ausgestattet, der mit auf seinem Umfang gleichmäßig verteilten, vorzugsweise vier Schlitzen (Nuten) 20a ausgestattet ist (vgl. Figur 3). Der Strangprofilanfang 2a jeder zu wickelnden Profilspirale 4 wird durch die Zuführung 7 in einen der Schlitze 20a eingelegt, so daß der Wickelanfang (Spiralenanfang) mit dem Wickelteller 9 bewegungsmäßig verbunden wird (vgl. Figuren 3 und 4).

Anstelle der Schlitze 20a im Kern 20 kann dem Wickelteller 9 ein höhenverfahrbares, um den Kern 20 mit Abstand bogenförmig auf einem Teilbereich des Wickeltellerumfanges herumgeführtes Führungsteil 21 gemäß der strichpunktierten Darstellung in Figur 4 zugeordnet sein, das den ankommenden Profilstrang 2a um den Kern 20 herum und an diesen heranführt sowie dabei die erste Spiralwindung bildet, die mit dem Wickelteller 9 eine Verbindung durch das weiche Kunststoffmaterial eingeht. Nach Erstellung der Anfangswindung wird das Führungsteil 21 nach oben weggefahren, so daß die übrigen Spiralwindungen auf dem Winkelteller 9 vorgenommen werden können.

Oberhalb der beiden hintereinander auf derselben Längsachse liegenden Wickelstationen 5 und 6 ist der Greifer 8 an Führungen 22 längsverfahrbar (Figur 2) und in sich beispielsweise durch einen Druckmittelzylinder 23 höhenverfahrbar ausgebildet. Dieser Greifer 8 besitzt ein sich auf den Führungen 22 abstützendes und darauf verfahrbares, vorzugsweise mittels eines kolbenstangenlosen Druckmittel-Band-Zylinders 24 hin- und herfahrbares Traggestell 25, auf dem der Druckmittelzylinder 23 für die Höhenbewegung des Greifers 8 gelagert ist.

An der Kolbenstange des Druckmittelzylinders 23 sind mittelbar mehrere, vorzugsweise vier radial nach außen und unten gerichtete Arme 26 festgelegt (vgl. Figur 1), die jeweils einen schwenkbaren, über einen Hebel- und Federmechanismus betätigbaren Greiffinger 27 aufweisen. Diese Greiffinger 27 werden zum Erfassen einer auf einer Trägerscheibe 29 aufliegenden, gewickelten Profilspirale 4 nach außen verschwenkt, fassen dann unter die Trägerscheibe 29 und schwenken zurück, so daß sie die Trägerscheibe 29 unterfassen und diese mit der Profilspirale 4 lagegesichert tragen können. Die Greiffinger 27 werden vorzugsweise von Winkelstücken gebildet.

Im Abstand zu den Greifern 8 ist oberhalb der beiden Wickelstationen 5 und 6 und in Profilstrang-Förderrichtung sowie in Profilspirale-Abführrichtung des Greifers 8 ein Magazin 28 angeordnet, das einen Stapel an Trägerscheiben 29, die vorzugsweise als Pappscheiben ausgeführt sind, aufnimmt. Diese Trägerscheiben 29 sind in sich eben ausgebildet und werden jeweils einzeln auf einen Wickelteller 9 aufgelegt, wobei sie mit einem mittigen Loch den Kern 20 überfassen, so daß sie auch eben auf dem Wickelteller 9 aufliegen.

Das Magazin 28 weist ein Traggestell 30 auf, das in sich die Pappscheiben 29 aufnimmt und ortsfest auf dem Gestell 1 lagert.

Ein unterer Haltering 30a des Magazines 28 ist auf den Führungen 22 mit dem Greifer 8 synchron längsverfahrbar, zieht mit unten seitig angebrachten Greiffüßen 32, 33 (Figur 5) jeweils die unterste Pappscheibe 29 aus dem Magazin 28 und bringt diese zur Ablegeposition auf den Wickelteller 9 (Figuren 1, 2 und 5). Diesem Haltering 30a ist ein Saug-Druckorgan 31 zugeordnet (Figur 2), das mit ihm verfahrbar ist. Zum Abnehmen der Pappscheibe 29 aus dem Haltering 30a senkt sich das Organ 31 ab, saugt die Pappscheibe 29 an, drückt sie dann gegenüber den feststehenden Greiffüßen 32 und den beweglichen Greiffüßen 33 aus dem Haltering 30a heraus und legt sie auf den Wickelteller 9 beim weiteren Absenken ab, wobei die Pappscheibe 29 durch ihr den Kern 20 umfassendes Loch gegenüber dem Wickelteller 9 zentriert liegt.

Bei einer anderen Ausführung des Magazines 28 liegen die Pappscheiben 29 in einem unter 45° zum Gestell 1 geneigten Korb. Das Druck-Saugorgan 31 nimmt saugend eine Pappscheibe 29 aus dem Korb, schwenkt diese beim Fahren mit dem Greifer 8 zum Wickelteller 9 und legt sie dort ab.

Dem Greifer 8 ist ein Aufnahmetisch 34 für eine Verpackung 35, vorzugsweise einen Karton, nachgeschaltet. Dieser Aufnahmetisch 34 ist an dem Gestell 1 mittels eines Huborganes 36 (das z.B. Druckmittelzylinder, Kugelrollspindeln, Hebegestänge, Zahnstangen-Ritzelgetriebe o.ä. aufweist) taktweise höhenbewegbar vorgesehen.

Die gewickelten Profilspiralen 4 werden vom Greifer 8 neben- und/oder übereinander in den Karton 35 eingelegt. Nach jeder Lage senkt sich der Aufnahmetisch 34 um die Höhe einer Profilspirale 4 ab, so daß der Greifer 8 immer dieselbe Abgabehöhe für die Profilspirale 4 einnimmt.

Zwischen Extruder 3 und Strangprofil-Zuführung 7 ist, wie in Figur 6 gezeigt ist, am Gestell 1 einen mikroprozessorgesteuerte elektronische Überwachungssteuerung 37 angeordnet, welche die Winkelgeschwindigkeit gemäß einem vorgegebenen Sollwert regelt. Da der Extruder 3 kontinuierlich und mit gleicher Geschwindigkeit das Strangprofil 2 abgibt und die Wickelvorrichtung durch das Zurückfahren der Zuführung 7 in die Wickel-Anfangsstellung sowie das Hochfahren der Wickelstation 5 bzw. 6 in die Wickelposition taktweise arbeitet, entsteht zwischen Extruder 3 und Zuführung 7 eine mehr oder weniger große Durchhangschlaufe 2b aus Strangmaterial 2, was von der Wickelvorrichtung wieder aufgeholt werden muß.

Bei einer über das Normale durchhängenden Profilstrangschlaufe 2b, wie diese etwa in Figur 6 gezeigt ist, wird die Andruckrolle 19 durch den Schnittimpuls zugeschaltet, verhindert ein Herausrutschen des Strangprofils 2 aus der Zuführung 7 und wirkt mit dem Transportband 18 zur Strangprofilförderung zusammen. Die Transportgeschwindigkeit des Transportbandes 18 ist dabei größer als die Abgabegeschwindigkeit des Profilstranges 2 aus dem Extruder 3, so daß dadurch die überschüssige Durchhanglänge des Profilstranges 2 (Durchhangschlaufe 2b) bis zur normalen Durchhangschlaufe 2c aufgeholt wird. Ist dies erreicht, erteilt die Steuerung 37 der Bewegungsmechanik der Andruckrolle 19 einen Impuls und diese wird aus ihrer Wirkstellung nach oben und somit vom Strangprofil 2 weg geschaltet, so daß nur noch das Transportband 18 die Zuführung des Strangprofils 2 zur Wickelstation 5 bzw. 6 vornimmt.

Die Andruckrolle 19 wirkt nur während der Aufholphase und wird durch die Steuerung 37 in eine Funktions- oder eine Nicht-Funktionsstellung gebracht.

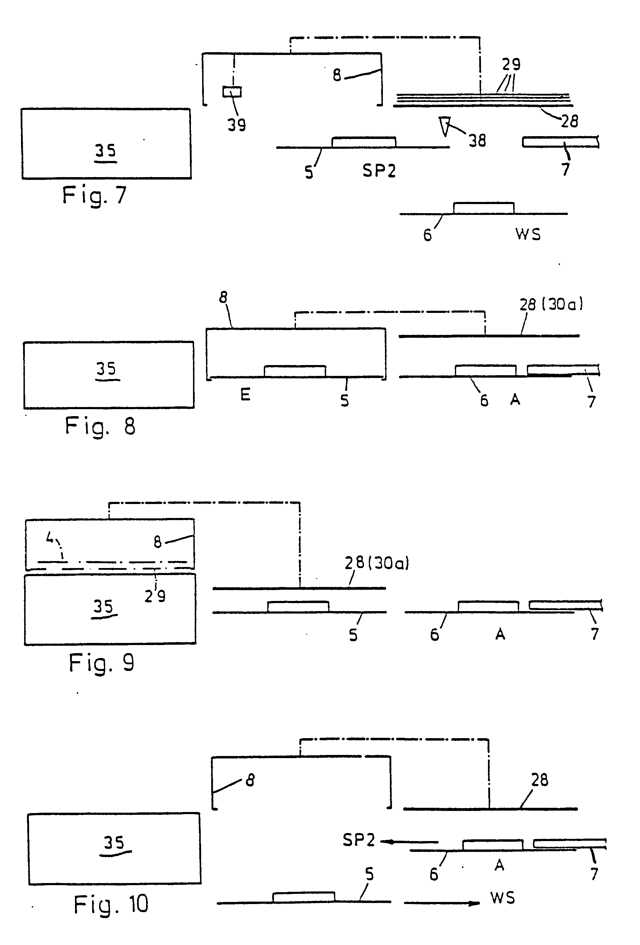

Am Gestell 1 ist ein Schneidorgan 38 angeordnet (vgl. Figur 2), das in der Wickelposition für die beiden nacheinander diese Wickelposition einnehmenden Wickelstationen 5 bzw. 6 liegt, also mit Abstand zur Zuführung 7. Weiterhin ist ein Klebeorgan 39 vorgesehen (Figur 7), das vorzugsweise am Greifer 8 angeordnet ist, das abgeschnittene Ende der fertiggewickelten Profilspirale 4 an die Pappscheibe 29 anklebt und damit die Profilspirale 4 an der Pappscheibe 29 fixiert.

Die gezeigte Vorrichtung arbeitet folgendermaßen, was anhand der Figuren 3 und 7 bis 10 näher erläutert sei:

In Figur 7 befindet sich die Wickelstation 5 und somit der Wickelteller 9 in der Schnittposition SP2, d.h. die Profilspirale 4 ist fast fertig auf die Pappscheibe 29 aufgewickelt. Nun erhält das Schneideorgan 38 einen Impuls vom Abzugsband des Extruders 3 und das Spiralende 4a wird vom Strangprofil 2 abgeschnitten. In dieser Schnittposition steht bereits die zweite Wickelstation 6 mit einer Pappscheibe 29 versehen unterhalb der Wickelposition und mit Abstand unterhalb und zwischen Zuführung 7 und Wickelstation 5 in einer Wartestellung WS. Der Greifer 8 befindet sich in der Wartestellung zum Abnehmen der Profilspirale 4 von der Wickelstation 5.

Nach dem Abschneiden fährt die Zuführung 7 aus ihrer Wickelstellung (vom Endschalter) EL oder ER — je nach Rechts- oder Linkswicklung der Spirale 4, was auf dieser Vorrichtung möglich ist, indem die Drehrichtungen der Wickelteller 9 geändert werden — in die Mittelstellung M, welche die Anfangsstellung für einen Wickelvorgang bildet (vgl. Figur 3).

Die Wickelstation 5 fährt dann zur Abgabestelle (Endschalter) E und dabei wird der abgeschnittene Rest des Strangprofiles 2 aufgewickelt. Das abgeschnittene Wickelende 4a muß immer an einer bestimmten Stelle auf der Pappscheibe 29 liegen bleiben. Gleichzeitig fährt die Wickelstation 6 aus ihrer Wartestellung WS nach oben in die Wickelstellung (Endschalter) A (Figuren 3 und 8), wobei der aus der Zuführung 7 herausragende Anfang 2a des Strangprofiles 2 sich automatisch in einen Schlitz 20a des Kernes 20 einlegt und fixiert.

Gleichzeitig fährt, wie in Figur 8 dargestellt, der Greifer 8 nach unten und das mitfahrende Klebeorgan 39 klebt das Wickelende 4a am Pappteller 29 fest, wobei gleichzeitig die Wickelstation 6 mit dem Wickeln einer neuen Profilspirale 4 beginnt. Wickelteller 9 und Zuführung 7 werden in einem bestimmten Verhältnis angesteuert, indem das Transportband 18 der Zuführung 7 während der Aufholphase für die Überhangschlaufe 2b schneller als das Abzugsband des Extruders 3 läuft und bei Beendigung der Aufholphase annähernd die Geschwindigkeit des Abzugsbandes des Extruders 3 über die Steuereinrichtung 37 erhält — die Andruckrolle 19 wird dabei weggeschaltet und gleichzeitig erfolgt die Geschwindigkeitsänderung des Transportbandes 18.

Das Ablegen (Wickeln) des Strangprofiles 2 auf die Pappscheibe 29 erfolgt in zwei einstellbaren Geschwindigkeiten, wobei sich die Drehzahl des Wickeltellers 9 in Abhängigkeit vom Wickeldurchmesser der Strangprofilspirale 4 ändert. Der Greifer 8 erfaßt die fertige Profilspirale 4 unter der Pappscheibe 29 und hebt diese durch Hochfahren von der Wickelstation 5 ab. Sodann fährt er mit dem Magazin 28 zur Verpackung 35, wo er die Profilspirale 4 in den Karton 35 ablegt. Gleichzeitig legt der über der Wickelstation 5 stehende Haltering 30a des Magazines 28 eine neue Pappscheibe auf den Wickelteller 9 (Figur 9). Während dieses Vorganges erfolgt das Wickeln in der Wickelstation 6, wobei die Zuführung 7 schnell aus der Mittelstellung M zum Endschalter AL oder AR (Figur 3) fährt und ein Schuß des Profilstranges 2 aus der Zuführung 7 kommt, damit die erste Spiralwindung nicht am Kern 20 festklebt, sondern mit gewissem Abstand um den Kern 20 gelegt wird. Dann fährt die Zuführung 7 kontinuierlich weiter bis zum Endschalter EL oder ER (Figur 3) und es erfolgt ein zug- und druckfreies Wickeln des Profilstranges 2.

Nach dem Ablegen der Profilspirale 4 in die Verpackung 35 ist der Greifer 8 mit dem Haltering 30a des Magazines 28 wieder in die Ausgangsstellung gemäß Figur 10 zurückgefahren, wie dies in Figur 7 ebenfalls gezeigt ist.

Nach Erreichen eines bestimmten Wickeldurchmessers fährt die Wickelstation 6 zum Endschalter SP2 in die Schneidestellung gemäß Figur 7. Vor dem Fahren der Wickelstation 6 aus der Wickelstellung A in die Schneidestellung SP2 ist die Spirale fast fertiggewickelt und die Fahrzeit von A nach SP2 entspricht dem noch aufzuwickelnden Rest der Spirale 4 (Stranglänge).

In der Schneidestellung SP2 wartet die Wickelstation 6 dann auf den Schnittimpuls.

In Figur 10 ist die Wickelstation zu einem Zeitpunkt kurz vor dem Fahren in die Schneidestellung SP2 gezeigt, wobei die mit einer neuen Pappscheibe 29 versehene Wickelstation 5 bereits nach unten gefahren ist und sodann entgegen der Wickelstation 6 in die Wartestellung WS zurückfährt.

Danach beginnt der gleiche Vorgang, wie einleitend beschrieben.

Der Aufnahmetisch 34 senkt die Verpackung 35 jeweils um die Höhe der Profilspirale 4.

Beispielsweise nach neun übereinander abgelegten Lagen von Profilspiralen 4 wird eine Warnleuchte eingeschaltet und gleichzeitig digital angezeigt, daß die neunte Lage eingelegt wurde, so daß die Bedienungsperson eine Anzeige erhält, daß nach der nächsten Lage die Verpackung vom Tisch 34 abgenommen und eine neue Verpackung 35 aufgesetzt werden muß. Die Digitalanzeige hat aber auch die Aufgabe, über einen bestimmten Nummerncode auftretende Fehler im gesamten Arbeitsablauf anzuzeigen.

Der Zuführkanal 18 ist in seiner Breite auf unterschiedlich breite Profile 2 stufenlos einstellbar ausgeführt.

In dieser Wickelvorrichtung können auch Profilspiralen 4 in Folien verpackt werden, wobei die Pappscheiben 29 entfallen, die auf den Wickeltellern 9 gewickelten Spiralen 4 zwischen zwei von Rollen kommenden Folienbahnen gelegt und dann die Folienbahnen um die Spirale 4 gleichzeitig verschweißt und abgeschnitten werden. Hierbei ist der Wickelteller 9 um seinen Kern 20 höhenverfahrbar ausgeführt, um die Profilspirale 4 nach oben über den Kern 20 zu bringen. Weiterhin ist dem Wickelteller 9 ein Schiebeorgan zugeordnet, das die Spirale 4 zwischen die Folien schiebt. Die folienverpackten Profilspiralen 4 werden dann mittels des Greifers 8 oder eines Saugers zur Verpackung 35 transportiert und dort abgelegt.

Anstelle der Kugelrollspindeln als motorisch abgetriebene Bewegungsorgane lassen sich auch Druckmittelzylinder, angetriebene Zahnrad-Ritzelgetriebe, angetriebene Hebelgestänge oder ähnliche technische Einrichtungen vorsehen.

Die Arbeitsgeschwindigkeit der erfindungsgemäßen Wickelvorrichtung kann der Geschwindigkeit des Extruders 3 angepaßt werden, z.B. in einem Bereich von 12 bis 25 m/min.

**Patentansprüche**

1. Vorrichtung zum Wickeln eines Strangprofiles aus elastischem und/oder flexiblem Material, insbesondere Weich-Kunststoff, mit einem Vorrichtungsgestell (1), an dem eine Wickelstation (5; 6) mit einer Aufwickeleinrichtung (9), mindestens eine das Strangprofil (2) an die Aufwickeleinrichtung (9) abgebende Zuführung (7), ein Schneideorgan (38) zum Abschneiden des Spiralendes und eine Einrichtung zum Verpacken der gewickelten Profilspirale (4) angeordnet sind, dadurch gekennzeichnet, daß am Vorrichtungsgestell (1) zwei in senkrechter und waagerechter Ebene höhen-, längs- und gegeneinander verfahrbare Wickelstationen (5; 6) angebracht sind, die jeweils in eine Wickelstellung (A) ein- und aus dieser wieder herausfahrbar sind,
die Zuführung (7) seitlich quer zur Längsverfahrrichtung der Wickelstationen (5; 6) verfahrbar angeordnet, eine Einrichtung (39) zur Lagefixierung des Spiralendes ausgebildet und
ein verschwenkbarer höhen- und längsverfahrbarer Greifer (8) zum Aufnehmen, Transportieren und Ablegen der gewickelten Profilspirale (4) sowie eine elektronische Überwachungssteuerung, die den automatischen Ablauf aller vorzunehmenden Einzelfunktionen steuert, vorgesehen sind.

2. Vorrichtung nach Anspruch 1, dadurch gekennzeichnet, daß jede Wickelstation (5; 6) einen um eine senkrechte Achse drehbaren, motorisch angetriebenen Wickelteller (9) aufweist, der jeweils an einem am Vorrichtungsgestell (1) längsverfahrbar gelagerten und in sich höhenverfahrbar ausgeführten Wagen oder Schlitten (10) gehalten ist.

3. Vorrichtung nach Anspruch 2, dadurch gekennzeichnet, daß der Wagen oder Schlitten (10) der einen Wickelstation (5) an einer außenseitigen Längsführung (11) und der Wagen oder Schlitten (10) der zweiten Wickelstation (6) an einer gegenüberliegenden Längsführung (11a) des Vorrichtungsgestelles (1) verschiebbar gelagert und beide Wagen oder Schlitten (10) durch ein motorisch angetriebenes Bewegungsglied (12), vorzugsweise eine Kugelrollspindel, hin- und herfahrbar sind.

4. Vorrichtung nach Anspruch 2 oder 3, dadurch gekennzeichnet, daß jeder Wagen oder Schlitten (10) durch ein Huborgan (13), z.B. Druckmittelzylinder, höhenverfahrbar ist.

5. Vorrichtung nach einem der Ansprüche 2 bis 4, dadurch gekennzeichnet, daß jeder Wickelteller (9) eine in sich ebene Auflagefläche für die zu wickelnde Profilspirale (4) aufweist, von der sich mittig ein Kern (20) mit mehreren, am Kernumfang gleichmäßig verteilt angeordneten Schlitzen (20a) zur Aufnahme und Fixierung des Anfangs (2a) jeder Spirale (4) abhebt.

6. Vorrichtung nach einem der Ansprüche 2 bis 4, dadurch gekennzeichnet, daß jeder Wickelteller (9) eine in sich ebene Auflagefläche für die zu wickelnde Profilspirale (4) aufweist, auf der sich mittig ein Kern (20) abhebt und der ein höhenverfahrbares Führungsteil (21) zur Bildung der Anfangswicklung der Spirale (4) um den Kern (20) zugeordnet ist.

7. Vorrichtung nach einem der Ansprüche 1 bis 6, dadurch gekennzeichnet, daß die Zuführung (7) einen in der Breite stufenlos einstellbaren Führungskanal (15) aufweist, der auf einer Querführung (16) zu beiden Seiten der Zuführrichtung mittels eines angetriebenen Bewegungsorganes (17), vorzugsweise einer Kugelrollspindel, hin- und herverschieblich gelagert ist.

8. Vorrichtung nach Anspruch 7, dadurch gekennzeichnet, daß im Führungskanal (15) ein endlos umlaufendes, motorisch angetriebenes Transportband (18) für die Profilstrangförderung angeordnet ist, dem eine die Profilstrangförderung unterstützende Andruckrolle (19) zugeordnet ist, die von der elektronischen Überwachungssteuerung (37) bei überschüssig anstehendem Strangprofil (2b) in eine Funktionsstellung und nach Aufholung des überschüssigen Strangprofiles (2b) durch die Zuführung (7) in eine Nicht-Funktionsstellung bewegbar (höhenverschwenkbar) ist.

9. Vorrichtung nach einem der Ansprüche 1 bis 8, dadurch gekennzeichnet, daß der Greifer (8) ein auf Längs-Führungen (22) des Vorrichtungsgestelles (1) mittels eines Bewegungsorganes (24), wie z.B. eines druckstangenlosen Druckmittel-Band-Zylinders, verfahrbares Traggestell (25) aufweist, auf dem sich ein Druckmittelzylinder (23) oder dgl. abstützt, an dessen höhenverfahrbarer Kolbenstange mittelbar Arme (26) befestigt sind, die über Hebel- und/oder Federelemente verschwenkbare Greiffinger (27) zum Unterfassen einer gewickelten oder einer auf einer auf dem Wickelteller (9) aufliegenden Trägerscheibe (29) aufgewickelten Spirale (4) halten.

10. Vorrichtung nach einem der Ansprüche 1 bis 9, dadurch gekennzeichnet, daß dem Greifer (8) in Strangprofil-Zuführrichtung und in Spiralen-Abtransportrichtung ein einen Stapel mit Trägerscheiben (29) aufnehmendes und die Trägerscheiben (29) einzeln auf die Wickelteller (9) abgebendes Magazin (28) nachgeschaltet ist, das mit dem Greifer (8) bewegungsmäßig in Längsverfahrrichtung gekoppelt ist.

11. Vorrichtung nach Anspruch 10, dadurch gekennzeichnet, daß das Magazin (28) ein sich auf dem Vorrichtungsgestell (1) abstützendes, die Trägerscheiben aufnehmendes, ortsfestes Traggestell (30) mit einem durch das Bewegungsorgan (24) längsverfahrbaren Haltering (30a) aufweist, an dem feststehende und bewegliche Greiffüße (32, 33) für das Herausnehmen und Tragen einer Trägerscheibe (29) aus dem Stapel vorgesehen sind und dem ein mitfahrendes, die Trägerscheibe (29) aus dem Haltering (30a) herausdrückendes, sie durch Saugkraft haltendes und auf den Teller (9) auflegendes Saug-Druckorgan (31) zugeordnet ist.

12. Vorrichtung nach Anspruch 10, dadurch gekennzeichnet, daß das Magazin (28) von einem am Gestell (1) geneigt angeordneten Trägerscheibenkorb und einem die Trägerscheiben (29) einzeln entnehmenden, saugend haltenden und auf einem Schwenkweg zum Wickelteller (9) bringenden Saugorgan (31) gebildet ist.

13. Vorrichtung nach einem der Ansprüche 1 bis 12, dadurch gekennzeichnet, daß an dem Vorrichtungsgestell (1) der Zuführung (7) gegenüberliegend ein taktweise höhenverfahrbarer Aufnahmetisch (34) für die Lagerung einer die gewickelten Profilspiralen (4) über- und/oder nebeneinander gestapelt aufnehmenden Verpackung (35), wie Karton, gelagert, ist.

14. Vorrichtung nach einem der Ansprüche 1 bis 12, dadurch gekennzeichnet, daß an dem Vorrichtungsgestell (1) Aufnahmen für zwei Folienrollen und eine Zuschweiß- und Trenneinrichtung für die Verpackung der gewickelten Profilspiralen (4) ohne Trägerscheiben (29) in Kunststoffolie angeordnet sind.

## Claims

1. Apparatus for winding an extruded profile of elastic and/or flexible material, particularly soft plastics material, including a frame (1) on which are arranged a winding station (5; 6) with a winding device (9), at least one supply (7) delivering the extruded profile (2) to the winding device (9), a cutting member (38) for cutting the end of the coil and a device for packing the wound profile coil (4), characterised in that mounted on the frame (1) are two winding stations (5; 6) which are movable in a vertical and a horizontal plane vertically, longitudinally and towards one another and which are each movable into a winding position (A) and out of it, the supply (7) is arranged so as to be movable laterally transverse to the longitudinal direction of movement of the winding stations (5; 6), a device (39) is provided for positionally fixing the end of the coil and a pivotable gripper (8), which is movable vertically and longitudinally, for picking up, transporting and depositing the wound profile coils (4) and an electronic monitoring control system, which controls the automatic sequence of all the individual functions to be performed, are provided.

2. Apparatus as claimed in claim 1, characterised in that each winding station (5; 6) has a motor-driven winding plate (9) which is rotatable about a vertical axis and each of which is mounted on the frame (1) so as to be longitudinally movable and is mounted vertically movably on a carriage or slide (10).

3. Apparatus as claimed in claim 2, characterised in that the carriage or slide (10) of the one winding station (5) is movably mounted on an outer longitudinal guide (11) and the carriage or slide (10) of the second winding station (6) is movably mounted on an opposing longitudinal guide (11a) of the frame (1) and both carriages or slides (10) may be moved back and forth by a motor-driven movement member (12), preferably a roller ball spindle.

4. Apparatus as claimed in claim 2 or 3, characterised in that each carriage or slide (10) may be moved vertically by a lifting member (13), e.g. a pressure medium cylinder.

5. Apparatus as claimed in one of claims 2 to 4, characterised in that each winding plate (9) has a flat engagement surface for the profile coil (4) to be wound, from the centre of which a core (20) projects upwardly with a plurality of slits (20a) uniformly distributed around the periphery of the core for receiving and fixing the beginning (2a) of each coil (4).

6. Apparatus as claimed in one of claims 2 to 4, characterised in that each winding plate (9) has a flat engagement surface for the profile coil (4) to be wound, on the centre of which a core (20) extends upwardly and associated with which is a vertically movable guide member (21) for forming the initial winding of the coil (4) about the core (20).

7. Apparatus as claimed in one of claims 1 to 6, characterised in that the supply (7) has a guide passage (15), the breadth of which is steplessly adjustable and which is mounted on a transverse guide (16) to be movable back and forth to both sides of the supply direction by means of a driven movement member (17), preferably a ball roller spindle.

8. Apparatus as claimed in claim 7, characterised in that in the guide passage (15) there is arranged an endlessly rotating, motor-driven transport belt (18) to convey the extruded profile, associated with which is a back-up roll (19) assisting in the conveying of the extruded profile, which roll is movable (vertically pivotable) by the electronic monitoring control system (37) when excess extruded profile (2b) is present into a functional position and, after taking up the excess extruded profile (2b) through the supply (7), into a non-functional position.

9. Apparatus as claimed in one of claims 1 to 8, characterised in that the gripper (8) has a support frame (25) which is movable on longitudinal guides (22) of the frame (1) by means of a movement member (24), such as a pressure medium band cylinder without a connecting rod, and on which a pressure medium cylinder (23) or the like is supported, to the vertically movable piston rod of which arms (26) are indirectly connected which hold gripping fingers (27) pivotable by means of lever and/or spring elements for engaging beneath a wound coil (4) or a coil (4) wound on a carrier disc (29) resting on the winding plate (9).

10. Apparatus as claimed in one of claims 1 to 9, characterised in that connected downstream of the gripper (8) in the extruded profile supply direction and in the coil delivery direction is a magazine (28) which receives a stack with carrier discs (29) and delivers the carrier disc (29) individually onto the winding plate (9) and which is coupled to move with the gripper (8) in the longitudinal direction of movement.

11. Apparatus as claimed in claim 10, characterised in that the magazine (28) has a fixed support frame (30), which is supported on the frame (1) of the apparatus and receives the carrier discs, with a mounting ring (30a) which is longitudinally movable by the movement member (24) and on which fixed and movable gripping feet (32, 33) for the removal and carrying of a carrier disc (29) out of the stack are provided and associated with which is a vacuum-pressure member (31) which moves with it, presses the carrier disc (29) out of the mounting ring (30a), holds it by the force of the vacuum and places it on the plate (9).

12. Apparatus as claimed in claim 10, characterised in that the magazine (28) is constituted by a carrier disc basket arranged inclined on the frame (1) and a vacuum member (31) which individually moves the carrier discs (29), holds them by suction and moves them on a pivotal path to the winding plate (9).

13. Apparatus as claimed in one of claims 1 to 12, characterised in that mounted on the frame (1) opposite to the supply (7) is a cyclically vertically movable receiving table (34) for the storage of a packaging (35), such as a cardboard box, receiving the wound profile coils (4) stacked above and/or next to one another.

14. Apparatus as claimed in one of claims 1 to 12, characterised in that arranged on the frame (1) are receptacles for two rolls of plastics film and a welding and cutting device for packing the wound profile coils (4) without carrier discs (29) in plastics film.

## Revendications

1. Dispositif d'enroulement d'un profilé extrudé en matière élastique et/ou flexible, en particulier en matière plastique souple, comportant un bâti de dispositif (1) sur lequel sont placés un poste d'enroulement (5; 6) avec un dispositif d'enroulement (9), au moins une alimentation (7) amenant le profilé extrudé (2) au dispositif d'enroulement (9), un organe de coupe (38) pour couper l'extrémité de la spirale, et un dispositif d'emballage de la spirale de profilé (4) enroulée, caractérisé en ce que deux postes d'enroulement (5; 6) sont placés sur le bâti de dispositif (1) de manière à pouvoir se déplacer en hauteur, longitudinalement et l'un vers l'autre, dans un plan vertical et horizontal, chacun d'eux pouvant entrer et ressortir d'une position d'enroulement (A), en ce que l'alimentation (7) peut se déplacer latéralement, perpendiculairement à la direction longitudinale de déplacement des postes d'enroulement (5; 6), en ce qu'il est prévu un dispositif (39) de fixation de la position de l'extrémité de la spirale, et en ce qu'il est prévu une pince (8) pouvant pivoter et se déplacer en hauteur et longitudinalement, destinée à recevoir, transporter et déposer la spirale de profilé (4) enroulée, ainsi qu'une commande de surveillance électronique qui commande le déroulement automatique de toutes les fonctions individuelles à effectuer.

2. Dispositif selon la revendication 1, caractérisé en ce que chaque poste d'enroulement (5; 6) comporte un plateau d'enroulement (9) motorisé, tournant autour d'un axe vertical, et qui est logé dans un wagon ou chariot (10) monté de manière à pouvoir se déplacer longitudinalement sur le bâti de dispositif (1), et conçu de manière à pouvoir se déplacer en hauteur.

3. Dispositif selon la revendication 2, caractérisé en ce que le wagon ou chariot (10) d'un poste d'enroulement (5) est monté coulissant sur un organe de guidage longitudinal (11) extérieur, et en ce que le wagon ou chariot (10) du deuxième poste d'enroulement (6) est monté coulissant sur un organe de guidage longitudinal (11a) opposé du bâti de dispositif (1), et en ce que les deux wagons ou chariots (10) peuvent se déplacer dans un mouvement de va-et-vient, par un organe de déplacement (12) motorisé, de préférence une broche à circulation de billes.

4. Dispositif selon la revendication 2 ou 3, caractérisé en ce que chaque wagon ou chariot (10) peut se déplacer en hauteur par un organe de levage (13), par exemple un vérin à fluide sous pression.

5. Dispositif selon l'une des revendications 2 à 4, caractérisé en ce que chaque plateau d'enroulement (9) comporte une surface d'appui plane pour les spirales de profilé (4) à enrouler, de laquelle se soulève au centre un noyau (20) comportant plusieurs fentes (20a) uniformément réparties sur le pourtour du noyau, destinées à recevoir et à fixer l'amorce (2a) de chaque spirale (4).

6. Dispositif selon l'une des revendications 2 à 4, caractérisé en ce que chaque plateau d'enroulement (9) comporte une surface d'appui plane pour la spirale de profilé (4) enroulée sur laquelle se soulève au centre un noyau (20) et à laquelle est associé un élément de guidage (21) se déplaçant en hauteur, pour former l'enroulement initial de la spirale (4) autour du noyau (20).

7. Dispositif selon l'une des revendications 1 à 6, caractérisé en ce que l'alimentation (7) comporte un canal d'alimentation (15) de largeur réglable en continu, qui est monté de manière à pouvoir se déplacer dans un mouvement de va-et-vient, sur un organe de guidage transversal (16), des deux côtés de la direction d'alimentation, au moyen d'un organe de déplacement (17) entraîné, de préférence une broche à circulation de billes.

8. Dispositif selon la revendication 7, caractérisé en ce que dans le canal de guidage (15) est placée une bande transporteuse (18) sans fin, motorisée, pour le transport du profilé extrudé, à laquelle est associé un galet de pression (19) facilitant le transport du profilé extrudé, et qui peut être déplacé (par pivotement en hauteur) par la commande de surveillance (37) électronique, dans une position de fonctionnement, dans le cas où le profilé extrudé (2b) est excédentaire, et dans une position de non-fonctionnement, après reprise du profilé extrudé (2b) excédentaire, par l'alimentation 7.

9. Dispositif selon l'une des revendications 1 à 8, caractérisé en ce que la pince (8) comporte un châssis de support (25) se déplaçant sur des organes de guidage longitudinaux (22) du bâti de dispositif (1), au moyen d'un organe de déplacement (24), tel qu'un cylindre à bande et fluide sous pression, sans tige de pression, sur lequel prend appui un vérin à fluide sous pression (23) ou similaire, sur la tige du piston, mobile en hauteur, duquel sont fixés indirectement des bras (26) qui supportent, par des éléments à levier et/ou à ressort, des doigts de prise (27) pivotants, pour saisir par en dessous une spirale (4) enroulée, ou une spirale (4) enroulée sur un disque de support (29) reposant sur le plateau d'enroulement (9).

10. Dispositif selon l'une des revendications 1 à 9, caractérisé en ce qu'un magasin (28) contenant une pile de disques de support (29), et déposant un à un les disques de support (29) sur le plateau d'enroulement (9), est monté en aval de la pince (8), dans le sens d'alimentation du profilé extrudé, et dans le sens de l'évacuation des spirales, ce magasin étant accouplé à la pince (8), de manière à pouvoir se déplacer dans la direction de déplacement longitudinal.

11. Dispositif selon la revendication 10, caractérisé en ce que la magasin (28) comporte un châssis de support (30) fixe, prenant appui sur le bâti de dispositif (1), recevant les disques de support, ainsi qu'un anneau de fixation (30a) se déplaçant longitudinalement à travers l'organe de déplacement (24), et sur lequel sont prévus des pieds de prise (32, 33) fixes et mobiles, pour prélever et porter un disque de support (29) de la pile, et auquel est associé un organe d'aspiration et de pression (31) se déplaçant en même temps, poussant le disque de support (29) hors de l'anneau de fixation (30a), le maintenant par aspiration, et le déposant sur le plateau (9).

12. Dispositif selon la revendication 10, caractérisé en ce que le magasin (28) est formé par une corbeille de disque de support disposée inclinée sur le bâti (1), et par un organe d'aspiration (31) prélevant un à un les disques de support (29), les maintenant par aspiration et les amenant par pivotement, vers un plateau d'enroulement (9).

13. Dispositif selon l'une des revendications 1 à 12, caractérisé en ce qu'une table de réception (34) destinée à supporter un emballage (35), tel qu'un carton, recevant les spirales de profilé (4) enroulées, empilées les unes sur les autres et/ou côte à côte, est montée sur le bâti de dispositif (1), à l'opposé de l'alimentation (7), cette table de réception pouvant se déplacer en hauteur en cadence.

14. Dispositif selon l'une des revendications 1 à 12, caractérisé en ce que le bâti de dispositif (1) comporte des logements pour deux rouleaux de feuilles et un dispositif de soudage et de séparation pour l'emballage dans une feuille de matière plastique, des spirales de profilé (4) enroulées, sans disques de support (29).

Fig. 1

Fig. 2

Fig. 3

Fig. 6

Fig. 5

Fig. 4

## Fig. 7

35

39

8

5   SP2

29

28

38

7

6   WS

## Fig. 8

35

8

E          5

28 (30a)

6   A          7

## Fig. 9

4

8

29

35

28 (30a)

5

6   A          7

## Fig. 10

35

8

28

SP2

6   A          7

5   WS